# EUROPEAN PATENT APPLICATION

(11) **EP 4 318 196 A1**
(43) Date of publication of application: **07.02.2024**
(21) Application number: 22833436.3
(22) Date of filing: 09.06.2022
(51) Int. Cl.: G06F 3/0482, G06F 3/0354, G06F 3/038, G06F 3/04842, G06F 3/04883, G06F 3/04886

(54) **METHOD FOR CONSTRUCTING USER INTERFACE ON BASIS OF INPUT FIELD, AND ELECTRONIC DEVICE**

(30) Priority: 02.07.2021 KR 20210087174
(71) Applicant: Samsung Electronics Co., Ltd., Suwon-si, Gyeonggi-do 16677 (KR)
(72) Inventor: KANG, Dongkyun, Suwon-si, Gyeonggi-do 16677 (KR); KO, Jaeho, Suwon-si, Gyeonggi-do 16677 (KR); KIM, Eunjung, Suwon-si, Gyeonggi-do 16677 (KR); MOON, Hyeyoung, Suwon-si, Gyeonggi-do 16677 (KR); BAE, Sungchan, Suwon-si, Gyeonggi-do 16677 (KR); LIM, Eunhae, Suwon-si, Gyeonggi-do 16677 (KR); HAM, Yookyung, Suwon-si, Gyeonggi-do 16677 (KR)
(74) Representative: HGF
(86) International application number: PCT/KR2022/008163
(87) International publication number: WO 2023/277380

(57) **Abstract**

An electronic device includes a display; a memory configured to store at least one application and instructions, a processor configured to execute the instructions to execute at least one application, extract attribute information corresponding to at least one input field included in an execution screen of the at least one application in response to the execution of the at least one application, configure an input list based on the at least one input field, based on the extracted attribute information, configure a key input interface to correspond to the at least one input field, and control the display to at least partially display the execution screen of the at least one application, the input list, and the key input interface.

## Description

### [Technical Field]

The disclosure relates to a method and an electronic device for configuring a user interface based on an input field.

### [Background Art]

In line with development of information/communication technologies and semiconductor technologies, various kinds of electronic devices have been evolving into multimedia devices that provide various multimedia services. For example, the multimedia services may include at least one of a voice communication service, a message service, a broadcasting service, a wireless Internet service, a camera service, an electronic payment service, or a music playback service.

An electronic device may include at least one application installed thereon to provide various services needed by the user. For example, applications installed on the electronic device may include a music application for playing sound sources desired by the user, a communication application for a voice communication service, a message application for transmitting messages, and/or a camera application for a camera service, etc.

The user may input various pieces of information to use at least one application, and may be provided with services based on input application. The electronic device may configure a user interface such that the user can easily input various pieces of information.

### [Disclosure of Invention]

### [Technical Problem]

An electronic device may provide various services to a user, based on various pieces of information that has been input by the user. For example, in connection with providing a schedule management service to the user, the electronic device needs a process of acquiring the date, the time, schedule information, and/or schedule place from the user. The user needs a process of manually inputting various pieces of information to at least one application, and this may increase the fatigue resulting from application use. The user's fatigue may increase in proportion to the degree of complicatedness of a screen according to execution of an application.

Various embodiments of the disclosure may provide an apparatus and a method for analyzing a screen according to execution of an application, extracting an input field included in the screen so as to configure an input list, and displaying a user interface including the configured input list.

### [Solution to Problem]

According to various embodiments, an electronic device may include a display module, a processor configured to be operatively connected to the display module, and a memory configured to store attribute information related to at least one application and to be operatively connected to the processor. The memory may store, when executed, instructions that cause the processor to execute the at least one application, extract attribute information corresponding to at least one input field included in an execution screen of the at least one application in response to the execution, configure an input list based on the at least one input field, configure a key input interface based on the extracted attribute information to correspond to the at least one input field, and at least partially display the execution screen of the at least one application, the input list, and the key input interface through the display module.

A method according to various embodiments may include executing at least one application installed in a memory, extracting attribute information corresponding to at least one input field included in an execution screen of the at least one application in response to the execution, configuring an input list based on the at least one input field, configuring a key input interface based on the extracted attribute information to correspond to the at least one input field, and at least partially displaying the execution scree of the at least one application, the input list, and the key input interface.

### [Advantageous Effects of Invention]

According to various embodiments of the disclosure, in connection with displaying an execution screen according to execution of an application, an input field included in the execution screen may be extracted, and an input list configured based on the extracted input field may be included in the execution screen. An electronic device may configure at least one input field included in the execution screen as an input list, and may at least partially include the same in a user interface. According to an embodiment, an input field requiring a user input may be configured as an input list and provided to the user, thereby improving user convenience. According to an embodiment, the user interface may be implemented such that the user can operate the electronic device with one hand, and the user may utilize the application more conveniently. Various other advantageous effects identified explicitly or implicitly through the disclosure may be provided.

### [Brief Description of Drawings]

The above and other aspects, features, and advantages of certain embodiments of the present disclosure will be more apparent from the following description taken in conjunction with the accompanying drawings, in which.
FIG. 1 is a block diagram illustrating an electronic device in a network environment according to according to various embodiments of the disclosure;
FIG. 2 is a diagram illustrating a user interface according to the execution of an application according to according to various embodiments of the disclosure;
FIG. 3 is a flowchart illustrating a method of configuring a user interface according to the execution of an application according to various embodiments of the disclosure;
FIG. 4 is a diagram illustrating a user interface configured based on an execution screen of an application, an input list, and a key input interface according to various embodiments of the disclosure;
FIG. 5A is a diagram illustrating an example in which an input list is scrolled in response to a touch input to an input list according to various embodiments of the disclosure;
FIG. 5B is a diagram illustrating an example in which an input list is configured with an icon corresponding to an input field according to various embodiments of the disclosure;
FIG. 5C is a diagram illustrating an example in which input information for an input field is displayed in an input list according to various embodiments of the disclosure;
FIG. 6 is a diagram illustrating a user interface configured based on an execution screen of an application according to various embodiments of the disclosure;
FIG. 7 is a diagram illustrating a key input interface for using an electronic pen according to various embodiments of the disclosure;
FIG. 8 is a diagram illustrating a user interface in the form of a window according to various embodiments of the disclosure;
FIG. 9 is a diagram illustrating a user interface configured based on an input list and a key input interface in the form of a window according to various embodiments of the disclosure;
FIG. 10 is a diagram illustrating an embodiment of configuring a user interface based on an execution screen of an external electronic device to which an electronic device is operatively connected and displaying the user interface according to various embodiments of the disclosure;
FIG. 11A is a diagram illustrating a user interface divided into a plurality of regions according to various embodiments of the disclosure; and
FIG. 11B is a diagram illustrating a method of adjusting a user interface so that a user can conveniently use the user interface with one hand according to various embodiments of the disclosure.

### [Mode for the Invention]

The following description with reference to the accompanying drawings is provided to assist in a comprehensive understanding of various embodiments of the disclosure as defined by the claims and their equivalents. It includes various specific details to assist in that understanding but these are to be regarded as merely exemplary. Accordingly, those of ordinary skill in the art will recognize that various changes and modifications of the various embodiments described herein can be made without departing from the scope and spirit of the disclosure. In addition, descriptions of well-known functions and constructions may be omitted for clarity and conciseness.

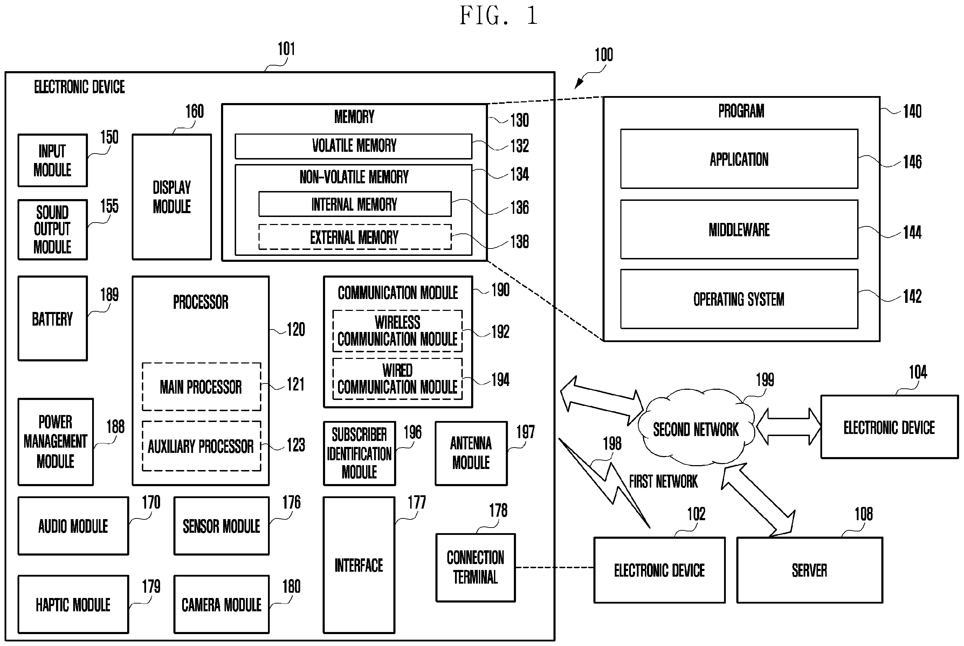

FIG. 1 illustrates an electronic device in a network environment according to an embodiment of the disclosure. Referring to FIG. 1, an electronic device 101 in a network environment 100 may communicate with an electronic device 102 via a first network 198 (e.g., a short-range wireless communication network), or at least one of electronic device 104 or a server 108 via a second network 199 (e.g., a long-range wireless communication network). The electronic device 101 may communicate with the electronic device 104 via the server 108. The electronic device 101 includes a processor 120, memory 130, an input module 150, an audio output module 155, a display module (or display) 160, an audio module 170, a sensor module 176, an interface 177, a connecting terminal 178, a haptic module 179, a camera module 180, a power management module 188, a battery 189, a communication module (or communication interface) 190, a subscriber identity module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. As at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. The processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). The auxiliary processor 123 (e.g., an ISP or a CP) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory 134 may include an internal memory 136 or external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The audio output module 155 may output sound signals to the outside of the electronic device 101. The audio output module 155 may include, for example, a speaker or a receiver. The speaker may be used for general purposes, such as playing multimedia or playing record. The receiver may be used for receiving incoming calls. The receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. The display module 160 may include a touch sensor adapted to detect a touch, or a pressure sensor adapted to measure the intensity of force incurred by the touch.

The audio module 170 may convert a sound into an electrical signal and vice versa. The audio module 170 may obtain the sound via the input module 150, or output the sound via the audio output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. The sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. The interface 177 may include, for example, a high definition multimedia interface (HDMI), a universal serial bus (USB) interface, a secure digital (SD) card interface, or an audio interface.

A connection terminal 178 may include a connector via which the electronic device 101 may be physically connected with the external electronic device (e.g., the electronic device 102). The connection terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. The haptic module 179 may include, for example, a motor, a piezoelectric element, or an electric stimulator.

The camera module 180 may capture a still image or moving images. The camera module 180 may include one or more lenses, image sensors, image signal processors, or flashes.

The power management module 188 may manage power supplied to the electronic device 101. The power management module 188 may be implemented as at least part of, for example, a power management integrated circuit (PMIC).

The battery 189 may supply power to at least one component of the electronic device 101. The battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the AP) and supports a direct (e.g., wired) communication or a wireless communication. The communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or a standard of the Infrared Data Association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. The antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. Another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

Commands or data may be transmitted or received between the electronic device 101 and the external electronic device 104 via the server 108 coupled with the second network 199. Each of the electronic devices 102 or 104 may be a device of a same type as, or a different type, from the electronic device 101. All or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

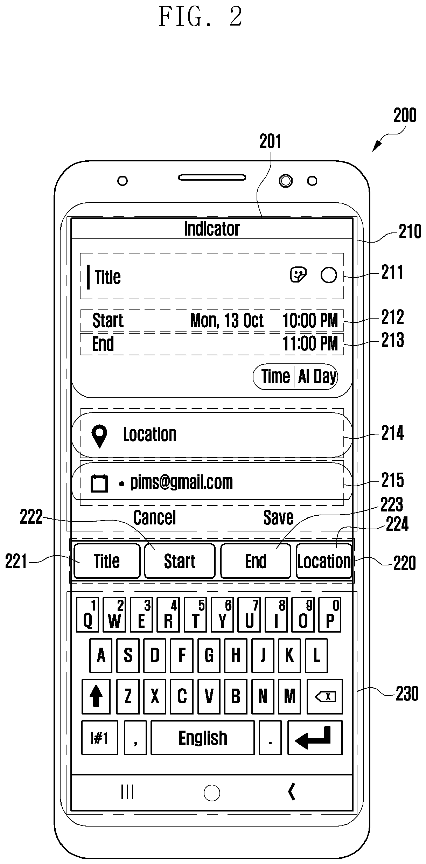

FIG. 2 is a diagram illustrating a user interface according to the execution of an application according to various embodiments of the disclosure.

According to various embodiments, an electronic device 200 (e.g., the electronic device 101 of FIG. 1) may store at least one program (e.g., the program 140 of FIG. 1) in a memory (e.g., the memory 130 of FIG. 1) as software. For example, the at least one program 140 may include at least one application (e.g., the application 146 of FIG. 1). The application 146 may be defined as application software developed to perform a specific task, and may provide various functions to a user so that the user may efficiently perform the specific task. For example, the calendar application is an application that manages a user's schedule, and may register or manage date, time, place, and/or schedule related information. The calendar application may record and store a calendar-based user schedule based on input information input by the user.

Referring to FIG. 2, the electronic device 200 may display a user interface 201 according to the execution of the application 146 (e.g., a calendar application) through a display or a display module (e.g., the display or the display module 160 of FIG. 1). The user interface 201 of FIG. 2 may include an execution screen of a calendar application for registering the user's schedule information in more detail. The user interface 201 of FIG. 2 may include an execution screen 210 of a calendar application, an input list 220, and/or a key input interface 230.

According to an embodiment, the execution screen 210 may include a screen displayed through the display module 160 in response to the execution of the calendar application. The execution screen 210 may include at least one input field (e.g., a first input field 211, a second input field 212, a third input field 213, and a fourth input field 214, and a fifth input field 215) for inputting user's schedule information. For example, the first input field 211 may include an area for inputting a title of a schedule. The second input field 212 may include an area for inputting a start time of a schedule, and the third input field 213 may include an area for inputting an end time of a schedule. The fourth input field 214 may include an area for inputting location information where a schedule is to be performed. The fifth input field 215 may include an area for inputting specific information related to a schedule. The execution screen 210 of FIG. 2 may include a registration screen for specifically registering a user's schedule.

According to an embodiment, the input list 220 may be configured based on at least one object corresponding to the input field (e.g., an input item) (e.g., the first input field 211, the second input field 212, the third input field 213, the fourth input field 214, and the fifth input field 215) included in the execution screen 210. For example, the display order of the input list 220 may be determined based on an order in which the input fields are displayed on the execution screen 210 (e.g., displayed in a top-down direction). As another example, the display order of the input list 220 may be determined based on the frequency of use of the input fields on the execution screen 210. For example, the input field having the highest frequency of use may be displayed first in the input list 220. According to an embodiment, the input list 220 may include a first object 221 corresponding to the first input field 211, a second object 222 corresponding to the second input field 212, and/or a third object 223 corresponding to the third input field 213. For example, in response to each input field included in the execution screen 210, at least one object may be generated and the input list 220 may include the at least one object.

According to an embodiment, the key input interface 230 may include an input tool for inputting schedule-related information into the input field (e.g., the first input field 211, the second input field 212, the third input field 213, the fourth input field 214, and the fifth input field 215) included in the execution screen 210. For example, when a text input is required in the first input field 211, a keypad may be mapped to correspond to the first input field 211. According to an embodiment, in response to a user's touch input for at least one object included in the input list 220, the electronic device 200 may select the at least one object, and may display a key input interface 230 corresponding to the selected at least one object. For example, in response to an input field requiring a text input, the keypad may be configured to be displayed on the key input interface 230, and in response to an input field requiring a date and time input, a predetermined input interface for intuitively selecting a date and time may be configured to be displayed on the key input interface 230.

Referring to FIG. 2, the electronic device 200 may configure a user interface based on at least one of the execution screen 210 according to the execution of the application, the input list 220 including the at least one object 221, 222, 223, and 224 corresponding to the at least one input field 211, 212, 213, 214, and 215 included in the execution screen 210, and the key input interface 230 corresponding to the selected objects 221, 222, 223, and 224. According to an embodiment, the electronic device 200 may implement the location and configuration of the user interface differently so that the user can easily operate the electronic device 200 with one hand.

According to an embodiment, when an application is installed in the memory 130, the electronic device 200 may store coding information constituting the execution screen of the application in the memory 130 together. For example, in response to the execution of the application, the electronic device 200 may display the execution screen through the display module 160. According to an embodiment, when the execution screen is displayed, the electronic device 200 may identify whether the at least one input field is included in the execution screen based on the coding information constituting the execution screen. For example, in the at least one input field, the type (e.g., text, date, time, and/or location information) of data to be input may be in a predetermined state. The electronic device 200 may display a key input interface corresponding to the at least one input field in response to a touch input to the at least one input field. For example, when a text input is required in the input field, a keypad (e.g., a keyboard) may be displayed, and when a date input is required, a predetermined date input device may be displayed to facilitate data selection.

According to an embodiment, when the execution screen is displayed, the electronic device 200 may automatically identify at least one input field included in the execution screen. The electronic device 200 may configure an input list including at least one object corresponding to the at least one identified input field, and may display the input list through the display module 160. According to an embodiment, when the object included in the input list is selected, the electronic device 200 may display a key input interface for inputting data into an input field corresponding to the selected object. According to an embodiment, in response to the execution of the application, the electronic device 200 may display the execution screen of the application, the input list configured based on the input field included in the execution screen, and the key input interface configured to correspond to the input filed. According to an embodiment, the electronic device 200 may adjust the size and position of the execution screen, the input list, and/or the key input interface so that the user can easily use the electronic device 200 with one hand.

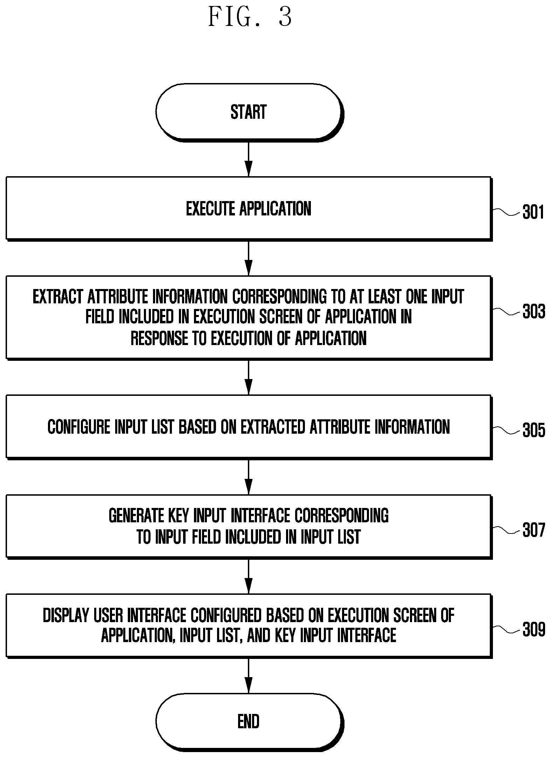

FIG. 3 is a flowchart illustrating a method of configuring a user interface according to the execution of an application according to various embodiments of the disclosure.

According to various embodiments, a processor (e.g., the processor 120 of FIG. 1) of an electronic device (e.g., the electronic device 101 of FIG. 1 and the electronic device 200 of FIG. 2) may store and install at least one application in a memory (e.g., the memory of FIG. 1), and may execute the at least one application. The processor 120 may display the execution screen of the application through a display module (e.g., the display module 160 of FIG. 1) in response to the execution of the application. For example, when a calendar application is executed, the processor 120 may display the execution screen of the calendar application through the display module 160, and may register and record schedule information based on the calendar application on the execution screen. In response to an execution command, the calendar application may be in a state in which the execution screen to be displayed is configured in advance, and may implement the execution screen based on coding information on the execution screen. For example, the coding information may include at least one content included in the execution screen, at least one input field, and data for identifying at least one object. According to an embodiment, the processor 120 may display the execution screen of the calendar application in response to the execution of the calendar application, and may identify at least one input field included in the execution screen.

According to an embodiment, the processor 120 may configure an input list based on the at least one identified input field. For example, the input list may include at least one object, and the at least one object may be configured to correspond to the at least one input field. According to an embodiment, when the object included in the input list is selected, the processor 120 may determine that an input field corresponding to the object is selected. According to an embodiment, the processor 120 may identify the type of data to be input into the input field (e.g., text and/or numbers {date, time}) based on attribute information of the input field. According to an embodiment, the processor 120 may determine a key input interface based on attribute information of the selected input field, and may display a key input interface corresponding to the selected input field. For example, when text is input into the input field, the processor 120 may generate and display a key input interface in the form of a keypad (e.g., a keyboard). For example, when a date and time are input into the input field, the processor 120 may generate and display a key input interface configured to facilitate data and time selection. For another example, when the user uses an electronic pen, the processor 120 may generate and display a board-type key input interface for detecting an input of the electronic pen.

Referring to FIG. 3, in operation 301, the processor 120 may execute an application stored and installed in the memory 130. For example, the processor 120 may execute a calendar application for registering a schedule.

In operation 303, the processor 120 may extract attribute information corresponding to at least one input field included in the execution screen of the application in response to the execution of the application. For example, when the calendar application is executed, the processor 120 may display an execution screen for schedule registration through the display module 160. The execution screen for schedule registration may include an input field for inputting a variety of information related to the schedule (e.g., schedule title, date, time, period, location, and/or detailed description). According to an embodiment, in the input field, the type of data to be input (e.g., text and/or numbers {date, time}) may be predetermined. According to an embodiment, when the application is installed in the electronic device 101, data related to the execution screen of the application may be stored and recorded in the memory 130. For example, a variety of attribute information constituting the execution screen may be stored in the form of a code. According to an embodiment, when a specific application is executed to display an execution screen, the processor 120 may extract the variety of attribute information included in the execution screen, and may perform various functions based on the extracted attribute information.

In operation 305, the processor 120 may configure an input list based on the extracted attribute information. According to an embodiment, when the execution screen for schedule registration is displayed, the processor 120 may identify at least one input field included in the execution screen, and may extract attribute information of the identified input field. The processor 120 may configure the input list based on the extracted attribute information. For example, the input list may include at least one object corresponding to the at least one input field. According to an embodiment, the processor 120 may configure the input list based on the order in which the input fields are displayed on the execution screen or the order mainly input by the user among the input fields. For another example, the processor 120 may identify a required input field that requires an essential input from among a plurality of input fields, and may configure the input list based on the identified required input field.

In operation 307, the processor 120 may generate the key input interface corresponding to the input field (e.g., the object) included in the input list. According to an embodiment, the input list may be configured to correspond to at least one input field, and the type (e.g., text and/or number {date, time}) of data to be input to the at least one input field may be also mapped and configured. For example, when the user selects the object included in the input list, the processor 120 may identify the input field corresponding to the selected object and the type of data to be input to the identified input field (e.g., date, time, account, and notification). The processor 120 may generate the key input interface based on the type of data. For example, the processor 120 may generate a date input interface configured to facilitate date selection when a date input is required, and may generate a time input interface configured to facilitate time selection when a time input is required. When an account input is required, the processor 120 may generate an account input interface in which at least one previously input account is configured in a list form. The date input interface may be implemented so that the user can select the year/month/day within a configured range, and the time input interface may be implemented so that the user can select the hour/minute within a configured range (e.g., 1 hour to 24 hours). As another example, when the user uses the electronic pen, the processor 120 may generate a board-type key input interface for inputting the electronic pen. According to an embodiment, the processor 120 may identify the type of data to be input into the input field (e.g., date, time, account, or notification), and may generate the input interface (e.g., a date input interface, a time input interface, an account input interface, or a notification input interface).

In operation 309, the processor 120 may display a user interface including the application execution screen, the input list, and the key input interface. For example, the processor 120 may divide the execution screen of the application into a first area (e.g., a viewing area) for displaying the execution screen of the application and a second area (e.g., an interaction area) for displaying at least one of the input list and the key input interface. The processor 120 may at least partially display the execution screen of the application, the input list, and the key input interface based on the first area and the second area. According to an embodiment, the size and position of the first area and the second area may be adjusted according to a usage pattern of the user. For example, when the user uses the electronic device 101 mainly using the right hand, the second area (e.g., the interaction area) may be adjusted based on a touch range of the right hand, and when the user uses the electronic device 101 mainly using the left hand, the second area (e.g., the interaction area) may be adjusted based on a touch range of the left hand. According to an embodiment, the processor 120 may configure the user interface to increase convenience according to the use of one hand of the user, and may display the user interface through the display module 160.

According to various embodiments, the electronic device 101 may include a display module 160, a processor 120 configured to be operatively connected to the display module 160, and a memory 130 configured to store attribute information related to at least one application 146 and to be operatively connected to the processor 120. The memory 130 may store instructions that, when executed, cause the processor 120 to execute the at least one application 146, to extract attribute information corresponding to at least one input field included in an execution screen 210 of the at least one application in response to the execution, to configure an input list 220 based on the at least one input field, to configure a key input interface 230 based on the extracted attribute information to correspond to the at least one input field, and to at least partially display the execution screen 210 of the at least one application, the input list 220, and the key input interface 230 through the display module 160.

According to an embodiment, the instructions, when executed, may cause the processor 120 to configure a user interface 201 based on at least one of the execution screen 210 of the at least one application, the input list 220, and the key input interface 230, and to display the user interface 201 through the display module 160.

According to an embodiment, the instructions, when executed, may cause the processor 120 to divide the user interface 201 into a first area that is a display area and a second area that is an interaction area and to adjust the size and position of the first area and the second area.

According to an embodiment, the instructions, when executed, may cause the processor 120 to identify the direction of a mainly used hand of the user based on a usage pattern stored in the memory 130 and to adjust the size and position of the first area and the second area based on the identified direction of the hand.

According to an embodiment, the instructions, when executed, may cause the processor 120 to identify the frequency of use corresponding to the at least one input field and to configure the input list based on the identified frequency of use.

According to an embodiment, the input list may include at least one object corresponding to the at least one input field.

According to an embodiment, the instructions, when executed, may cause the processor 120 to identify that an input field corresponding to the selected object has been selected in response to the selection of the at least one object.

According to an embodiment, the at least one object may include information on data recently input into the at least one input field.

According to an embodiment, the instructions, when executed, may cause the processor 120 to identify the type of data to be input to the at least one input field based on the extracted attribute information and to configure the key input interface based on the type of the data.

According to an embodiment, the type of the data may include text and/or a number related to a date and time.

According to an embodiment, the instructions, when executed, may cause the processor 120 to configure a key input interface configured to correspond to a date and time when the type of the data is a number related to the date and time.

According to an embodiment, the instructions, when executed, may cause the processor 120 to identify whether an electronic pen is used and to configure a key input interface for acquiring input information by the electronic pen while the electronic pen is used.

According to an embodiment, the electronic device may further include a communication interface or a communication module 190 configured to be operatively connected with an external electronic device, wherein the instructions may cause the processor 120 to acquire information related to at least one input field included in the execution screen from the operatively connected external electronic device through the communication module 190 and to configure the input list and the key input interface based on the acquired information.

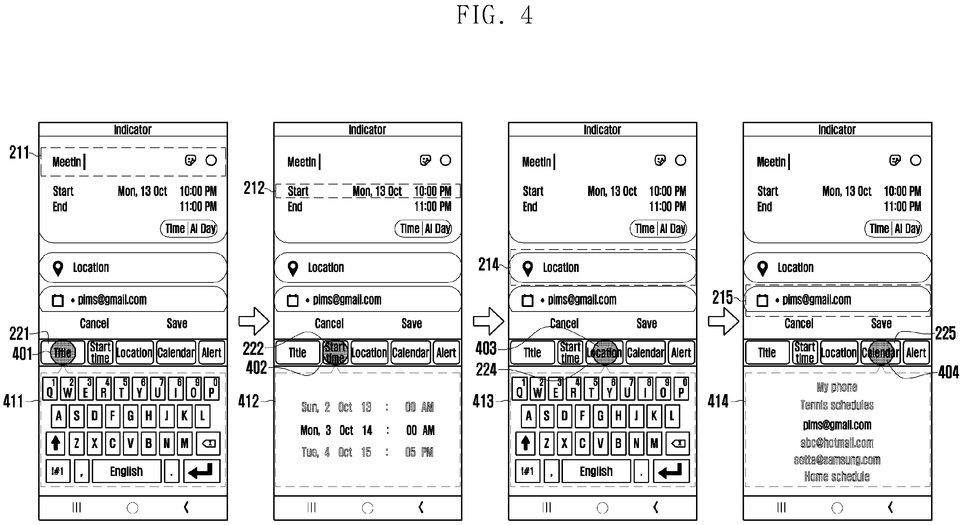

FIG. 4 is a diagram illustrating a user interface configured based on an execution screen of an application, an input list, and a key input interface according to various embodiments of the disclosure.

Referring to FIG. 4, an electronic device (e.g., the electronic device 101 of FIG. 1) may display an execution screen according to the execution of an application through a display module (e.g., the display module 160 of FIG. 1). For example, a processor (e.g., the processor 120 of FIG. 1) of the electronic device 101 may display a user interface related to an execution screen of a calendar application through the display module 160 in response to the execution of the calendar application. The user interface may include an execution screen (e.g., the execution screen 210 of FIG. 2) of an application, an input list (e.g., the input list 220 of FIG. 2), and/or a key input interface (e.g., the key input interface 230).

Referring to FIG. 4, the processor 120 may display a key input interface 230 corresponding to at least one object 221, 222, 224, and 225 included in the input list 220. For example, the processor 120 may identify attribute information (e.g., text) of a first input field 211 included in the execution screen 210 of the application, and may display a keypad (e.g., a keyboard) interface 411 corresponding to the identified attribute information. According to an embodiment, at least one input field included in the execution screen 210 may be implemented in the form of at least one object in the input list 220. For example, the first input field 211 may be implemented as a first object 221 (title) in the input list 220, and when the first object 221 is selected in 401, the processor 120 may identify that the first input field 211 has been selected. In response to the selection 401 of the first object 221, the processor 120 may display the keypad interface 411 determined based on the attribute information (e.g., text) of the first input field 211.

According to an embodiment, the processor 120 may identify attribute information (e.g., date and time) of the second input field 212 included in the execution screen 210 of the application, and may display a date/time interface 412 corresponding to the identified attribute information. For example, the second input field 212 may be implemented as a second object 222 (start time) in the input list 220, and when the second object 222 is selected in 402, the processor 120 may identify that the second input field 212 has been selected. In response to the selection 402 of the second object 222, the processor 120 may display the date/time interface 412 determined based on the attribute information (e.g., date and time) of the second input field 212. The second input field 212 may be an input field for inputting a start time of a schedule, and although not shown, the third input field 213 may be an input field for inputting an end time of the schedule. The second input field 212 and the third input field 213 may display substantially the same key input interface.

According to an embodiment, the processor 120 may identify attribute information (e.g., text {place}) of the fourth input field 214 included in the execution screen 210 of the application, and may display a keypad interface 413 corresponding to the identified attribute information. For example, the fourth input field 214 may be implemented as a fourth object 224 (location) in the input list 220, and when the fourth object 224 is selected in 403, the processor 120 may identify that the fourth input field 214 has been selected. In response to the selection 403 of the fourth object 224, the processor 120 may display the keypad interface 413 determined based on the attribute information (e.g., text {location}) of the fourth input field 214. Although not shown, the processor 120 may display a map interface for inputting place information in the fourth input field 214.

According to an embodiment, the processor 120 may identify attribute information (e.g., schedule detailed information) of the fifth input field 215 included in the execution screen 210 of the application, and may display a detailed information interface 414 corresponding to the identified attribute information. For example, the fifth input field 215 may be implemented as a fifth object 225 (calendar) in the input list 220, and when the fifth object 225 is selected in 404, the processor 120 may identify that the fifth input field 215 has been selected. In response to the selection 404 of the fifth object 225, the processor 120 may display the detailed information interface 414 determined based on the attribute information (e.g., schedule detailed information) of the fifth input field 215.

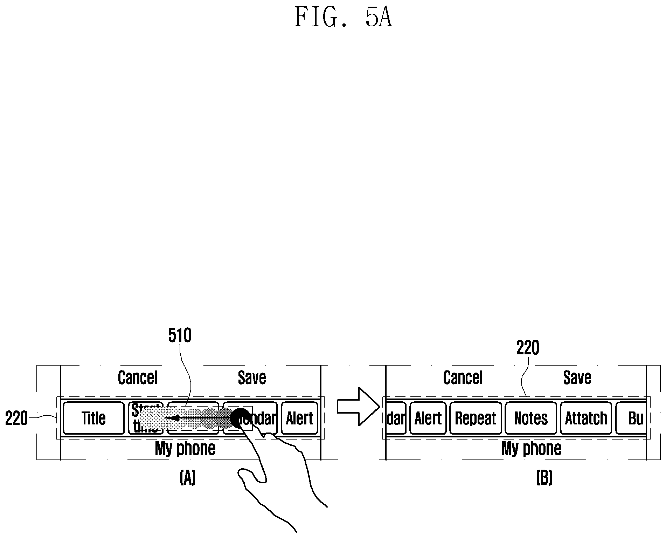

FIG. 5A is a diagram illustrating an example in which an input list is scrolled in response to a touch input to an input list according to various embodiments of the disclosure.

Referring to FIG. 5A, an input list 220 (e.g., the input list 220 of FIG. 2) constituting a user interface is shown in an enlarged manner. A processor (e.g., the processor 120 of FIG. 1) of an electronic device (e.g., the electronic device 101 of FIG. 1) may configure the input list 220 based on at least one input field included in an execution screen of an application.

According to an embodiment, the input list 220 may include at least one object corresponding to at least one input field. For example, in the input list 220, the display order of the objects may be determined based on the display order and/or the frequency of use of at least one input field. According to an embodiment, the input list 220 may be scrolled in response to a user's drag input 510 (e.g., a scroll input).

According to an embodiment, the size and position of the input list 220 may be adjusted to increase convenience according to the use of one hand of the user, and in response to a user's touch input (e.g., the drag input 510), the input list 220 may be scrolled so that the plurality of objects can be selected.

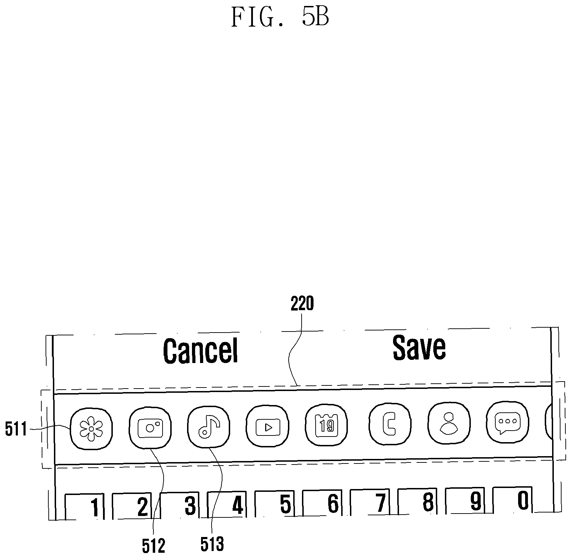

FIG. 5B is a diagram illustrating an example in which an input list is configured with an icon corresponding to an input field according to various embodiments.

Referring to FIG. 5B, an input list 220 (e.g., the input list 220 of FIG. 2) constituting a user interface is shown in an enlarged manner. A processor (e.g., the processor 120 of FIG. 1) of an electronic device (e.g., the electronic device 101 of FIG. 1) may configure the input list 220 based on at least one input field included in an execution screen of an application.

According to an embodiment, the input list 220 may include at least one object corresponding to at least one input field. For example, the at least one object may be replaced with icons 511, 512, and 513. The at least one object may be implemented as various types of icons according to a user's configuration.

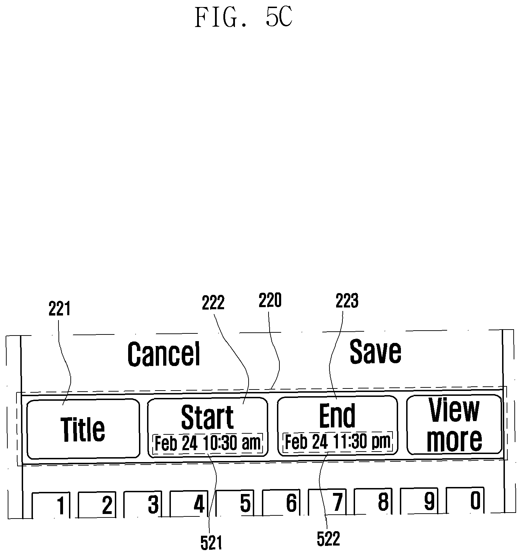

FIG. 5C is a diagram illustrating an example in which input information for an input field is displayed in an input list according to various embodiments of the disclosure.

Referring to FIG. 5C, an input list 220 constituting a user interface (e.g., the input list 220 of FIG. 2) is shown in an enlarged manner. A processor (e.g., the processor 120 of FIG. 1) of an electronic device (e.g., the electronic device 101 of FIG. 1) may configure the input list 220 based on at least one input field included in an execution screen of an application.

According to an embodiment, the input list 220 may include at least one object 221, 222, and 223 corresponding to at least one input field. For example, the first object 221 (title) may be implemented to correspond to a first input field (e.g., the first input field 211 of FIG. 2, an area in which a title of a schedule is input).

According to an embodiment, the processor 120 may identify input information recently input to at least one input field, and may display the input information together on an object included in the input list 220. For example, the input list 220 may include a second object 222 for inputting a start time of a schedule and a third object 223 for inputting an end time of the schedule. The second object 222 may be implemented such that recently input first input information 521 (e.g., Feb 24 10:30 am) is shown, and the third object 223 may be implemented such that recently input second input information 522 (e.g., Feb 24 11:30 am) is shown. According to an embodiment, in response to the selection of the object, the processor 120 may display a key input interface (e.g., the key input interface 230 of FIG. 2) (e.g., a date/time interface) corresponding to the selected object. In addition, the key input interface 230 may be displayed based on recently input information.

According to another embodiment, the processor 120 may identify a usage rate for each input field (e.g., access frequency, input frequency, and/or frequency of use for each input field for a predetermined period) based on the at least one input field, and may determine the display order of the objects based on the usage rate. For example, the input list 220 may be configured in order from the input field having the highest usage rate (e.g., a frequency of use) to the input field having the lowest usage rate. According to another embodiment, the processor 120 may rearrange the order of the objects included in the input list based on the usage rate of each input field.

According to another embodiment, the processor 120 may determine the order of the at least one object included in the input list according to a predetermined criterion (e.g., statistical data, use history). For example, the processor 120 may learn a user's usage pattern according to the input field provided by various applications, and may determine the order of the objects so that the input fields (e.g., the objects) having a relatively high usage probability are preferentially displayed based on the usage pattern.

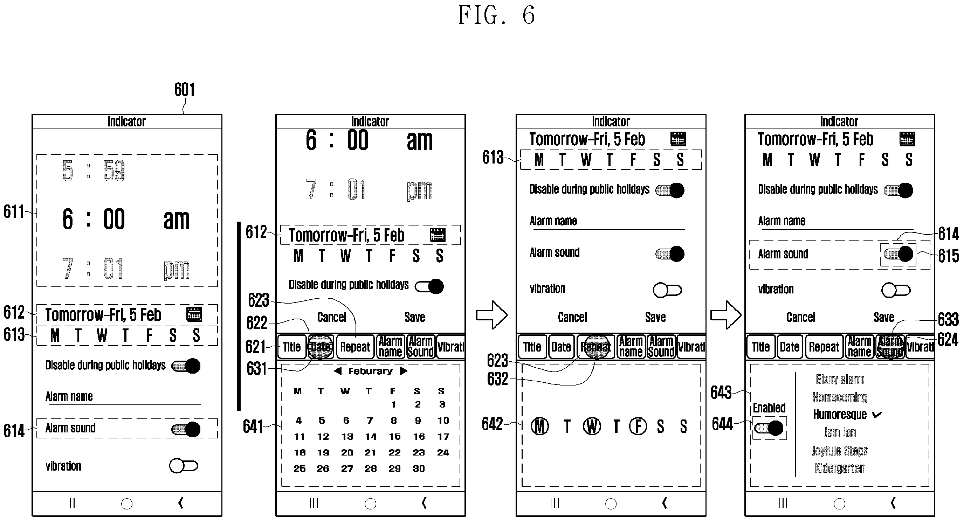

FIG. 6 is a diagram illustrating a user interface configured based on an execution screen of an application according to various embodiments of the disclosure.

Referring to FIG. 6, a processor (e.g., the processor 120 of FIG. 1) of an electronic device (e.g., the electronic device 101 of FIG. 1) may display an execution screen 601 according to the execution of an alarm application through a display module (e.g., the display module 160 of FIG. 1). According to an embodiment, the execution screen 601 may include at least one input field 611, 612, 613, and 614 and the input field may be configured in various forms. For example, the processor 120 may determine an alarm time based on the first input field 611, and may determine an alarm date based on the second input field 612. The processor 120 may determine a day of the week on which an alarm is to be configured based on the third input field 613, and may determine an alarm music sound based on the fourth input field 614. According to an embodiment, the processor 120 may identify input fields of various types (e.g., data types), and may variably provide a key input interface corresponding to the identified input field to the user.

Referring to FIG. 6, in response to the execution of the alarm application, the processor 120 may display a user interface related to an execution screen of the alarm application through the display module 160. For example, the user interface may include an execution screen (e.g., the execution screen 210 of FIG. 2) of the application, an input list (e.g., the input list 220 of FIG. 2), and/or a key input interface (e.g., the key input interface 230).

According to an embodiment, the input list 220 may include at least one object corresponding to at least one input field. For example, the input list 220 may include a first object 621 (time) corresponding to the first input field 611, a second object 622 (date) corresponding to the second input field 612, and a third object 623 (repeat) corresponding to the third input field 613, and a fourth object 624 (alarm sound) corresponding to the fourth input field 614.

Referring to FIG. 6, the processor 120 may display a date interface 641 for selecting a date in response to a first input 631 for the second object 622. The processor 120 may display a day-of-week interface 642 for repeatedly configuring an alarm in response to a second input 632 for the third object 623. The processor 120 may display a sound interface 643 for configuring an alarm sound in response to a third input 633 for the fourth object 624. Referring to FIG. 6, the fourth object 624 may include an option button 615 for selecting the type of the alarm sound, and in response to selection (e.g., activation) of the option button 615, the type of the alarm sound may be selected.

According to an embodiment, the processor 120 may extract attribute information corresponding to at least one input field, and may variably provide a key input interface to the user based on the extracted attribute information. The processor 120 may implement various types of key input interfaces based on various types of attribute information. According to an embodiment, when the user uses the electronic device 101 with one hand, the processor 120 may adjust the type, size, and/or display position of a user interface (e.g., the execution screen 210 of the application, the input list 220, and/or the key input interface 230) so that the user can use the electronic device 101 more conveniently.

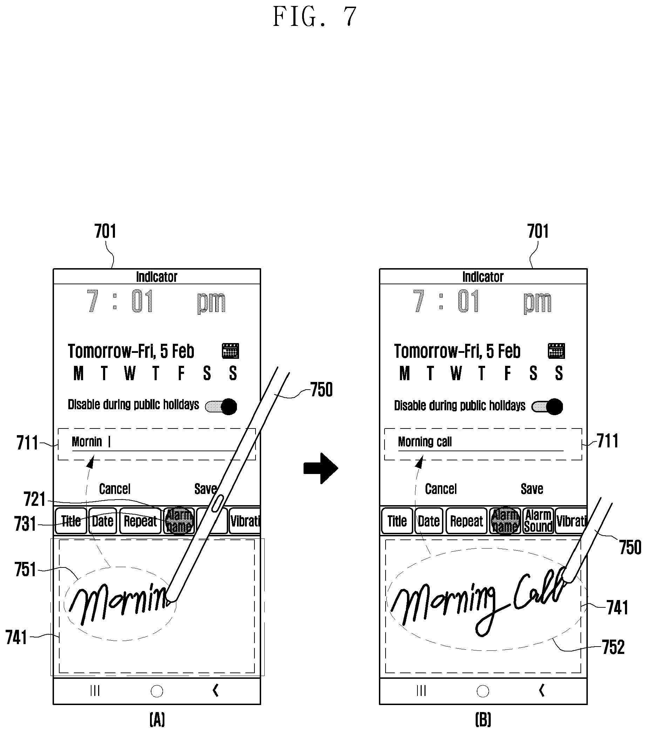

FIG. 7 is a diagram illustrating a key input interface for using an electronic pen according to various embodiments of the disclosure.

According to an embodiment, a processor (e.g., the processor 120 of FIG. 1) of an electronic device (e.g., the electronic device 101 of FIG. 1) may configure an input list (e.g., the input list 220 of FIG. 2) based on at least one input field included in an execution screen (e.g., the execution screen 210 of FIG. 2) of an application. The input list 220 may include at least one object corresponding to the at least one input field. According to an embodiment, in response to the selection of the at least one object, the processor 120 may identify the input field corresponding to the selected object, and may display a key input interface (e.g., the key input interface 230 of FIG. 2) for inputting data to the input field.

Referring to FIG. 7, a data input using an electronic pen 750 is shown in a first input field 711 on an execution screen 701 according to the execution of an alarm application. For example, the processor 120 may identify an input 731 (e.g., a user input) for an object 721 corresponding to the first input field 711, and may display a board interface 741 for the data input to the first input field 711. For example, the processor 120 may detect that the user is using the electronic pen 750, and may display the board interface 741 for an input through the electronic pen 750.

According to an embodiment, the processor 120 may perform an input to the first input field 711 in real time by identifying the input of the electronic pen 750 based on the board interface 741. For example, the processor 120 may extract text 751 and 752 corresponding to the input of the electronic pen 750, and may input the extracted text 751 and 752 to the first input field 711.

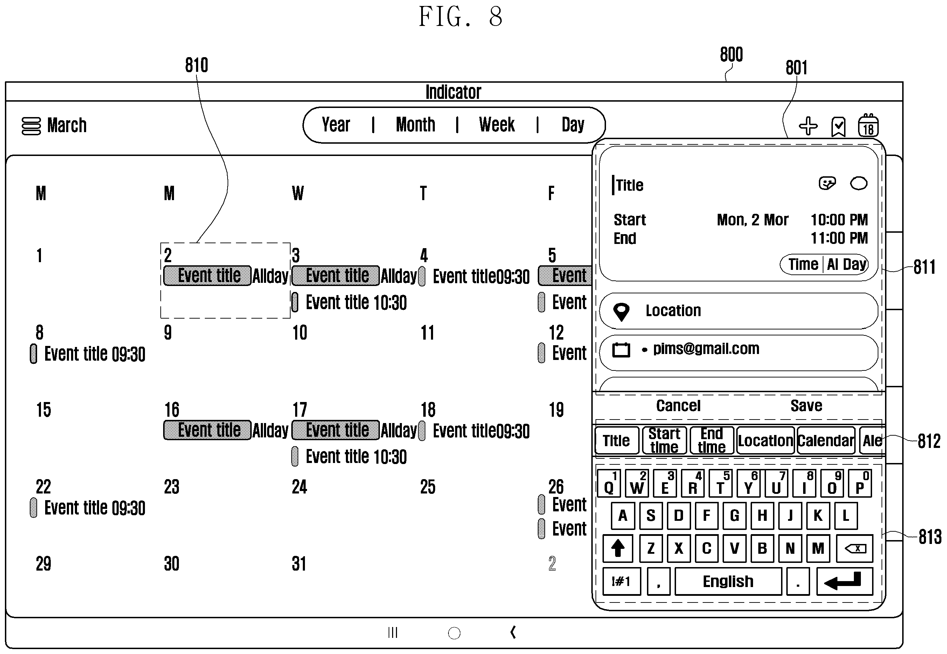

FIG. 8 is a diagram illustrating a user interface in the form of a window according to various embodiments of the disclosure.

Referring to FIG. 8, a processor (e.g., the processor 120 of FIG. 1) of an electronic device (e.g., the electronic device 101 of FIG. 1) may display a calendar screen 800 according to the execution of a schedule application on a display module (e.g., the display module 160 of FIG. 1). The calendar screen 800 is a screen configured in the form of a calendar, and may manage the schedule for each date.

According to an embodiment, when a specific date 810 (e.g., March 2 {Mon, 2 Mar}) is selected, the processor 120 may display a user interface 801 for schedule registration in the form of a window. For example, the user interface 801 may include an execution screen 811 showing input information required for schedule registration, an input list 812, and/or a key input interface 813.

According to an embodiment, the electronic device 101 is not limited to a portable electronic device, and may include a computer-type electronic device (e.g., an electronic device supporting a large screen). For example, the electronic device 101 may display the user interface 801 in the form of a window that at least partially overlaps the calendar screen 800.

According to an embodiment, the electronic device 101 may overlap and display the window-type user interface 801 while displaying the calendar screen 800 including a user schedule on the entire screen. For example, while registering a schedule for a specific date, the user may identify other already registered schedules together, and user convenience may be improved according to the schedule registration.

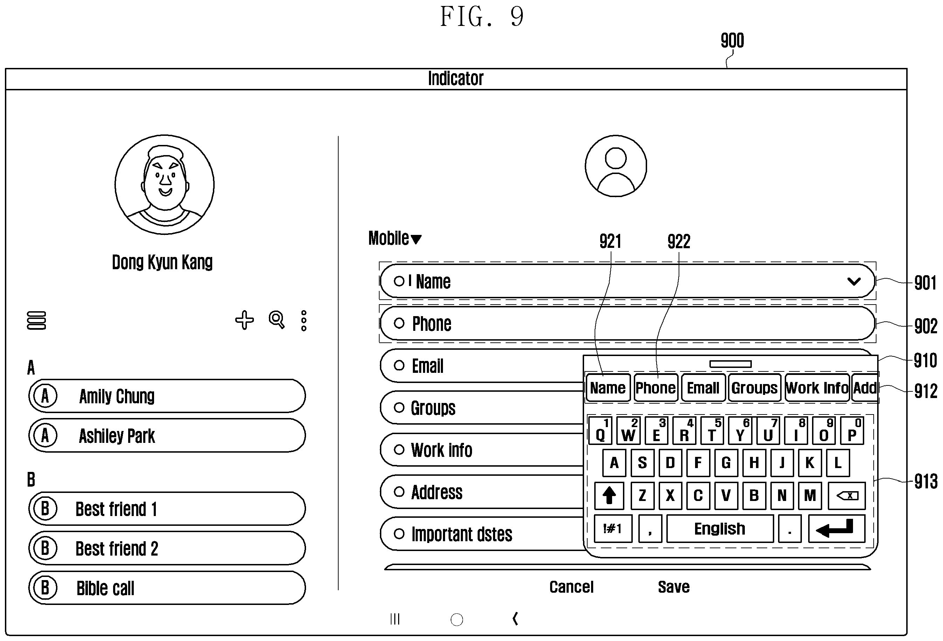

FIG. 9 is a diagram illustrating a user interface configured based on an input list and a key input interface in the form of a window according to various embodiments of the disclosure.

Referring to FIG. 9, a processor (e.g., the processor 120 of FIG. 1) of an electronic device (e.g., the electronic device 101 of FIG. 1) may display a user interface 910 for inputting data to at least one input field 901 and 902 in the form of a window. For example, the user interface 910 may include an input list 912 including at least one object 921 and 922 corresponding to the at least one input field 901 and 902, and/or a key input interface 913.

According to an embodiment, the user interface 910 may be implemented as a component for inputting data into the at least one input field 901 and 902 included in the execution screen 900. For example, the user interface 910 may be configured based on at least one of the input list 912 including the objects 921 and 922 corresponding to the at least one input field 901 and 902, and the key input interface 913 matching the type (e.g., date, time, account, notification) of data to be input into the at least one input field 901 and 902.

According to an embodiment, the electronic device 101 may overlap and display the user interface 910 in the form of a window while displaying the execution screen 900 for registering a user's profile. The user interface 910 may include the at least one object 921 and 922 corresponding to the at least one input field 901 and 902 included in the execution screen 900. According to an embodiment, the size of the window-type user interface 910 may be adjusted according to the user's intention and the position of the window-type user interface 910 may be changed while the window-type user interface 910 overlaps on the execution screen 900 and is displayed. According to an embodiment, the user may intuitively identify missing or erroneous content while recording the user's profile, and user convenience may be improved according to an input of specific information.

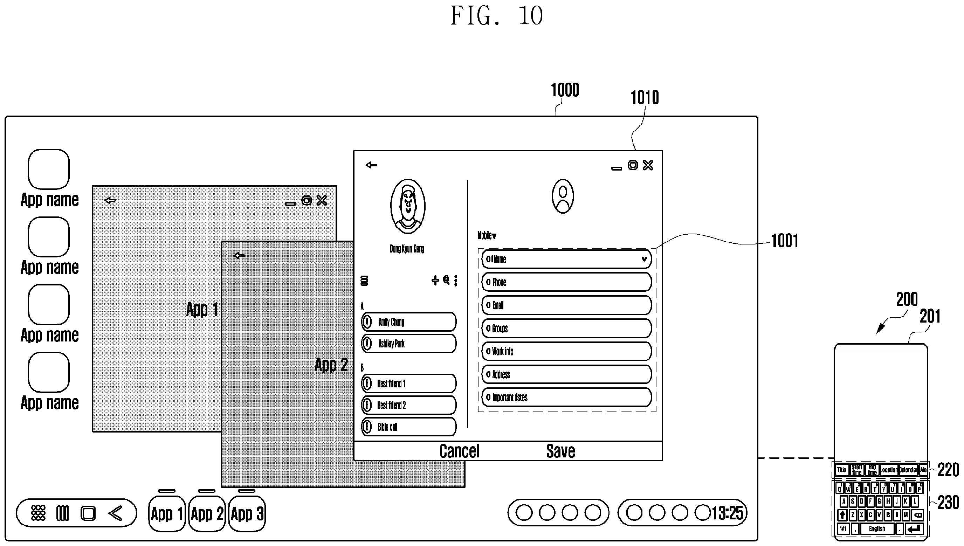

FIG. 10 is a diagram illustrating an embodiment of configuring a user interface based on an execution screen of an external electronic device to which an electronic device is operatively connected and displaying the user interface according to various embodiments of the disclosure.

Referring to FIG. 10, an electronic device 200 (e.g., the electronic device 101 of FIG. 1) may be in a state of being operatively connected to an external electronic device (e.g., the electronic devices 102 and 104 of FIG. 1). According to an embodiment, the electronic device 200 may configure and display the user interface 201 based on an execution screen 1000 of the external electronic device.

Referring to FIG. 10, the external electronic device may display an execution screen 1010 according to the execution of a specific application. For example, the execution screen 1010 may include at least one input field 1001. According to an embodiment, the electronic device 200 may acquire attribute information on the at least one input field 1001 included in the execution screen 1010 from the operatively connected external electronic device, and may configure the input list 220 and the key input interface 230 based on the attribute information.

According to an embodiment, the electronic device 200 may at least partially share data with the operatively connected external electronic device, or may be at least partially synchronized therewith. The electronic device 200 may configure the user interface 201 based on the at least one input field 1001 included in the execution screen 1010 of the application being executed in the external electronic device, and may receive data through the user interface 201. The electronic device 200 may transmit input data to the external electronic device, and may record and display the data on the application execution screen 1010 of the external electronic device.

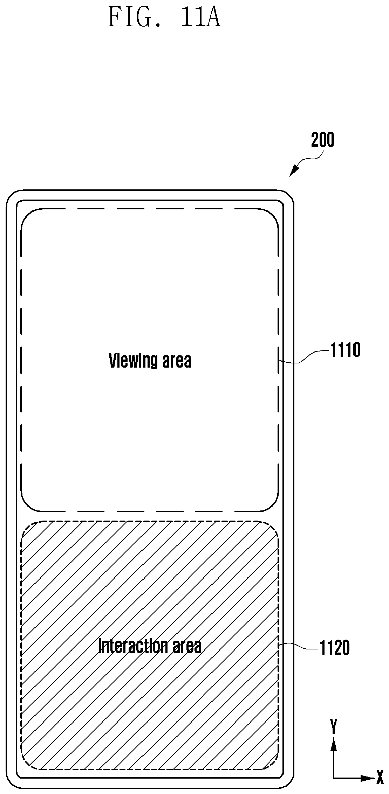

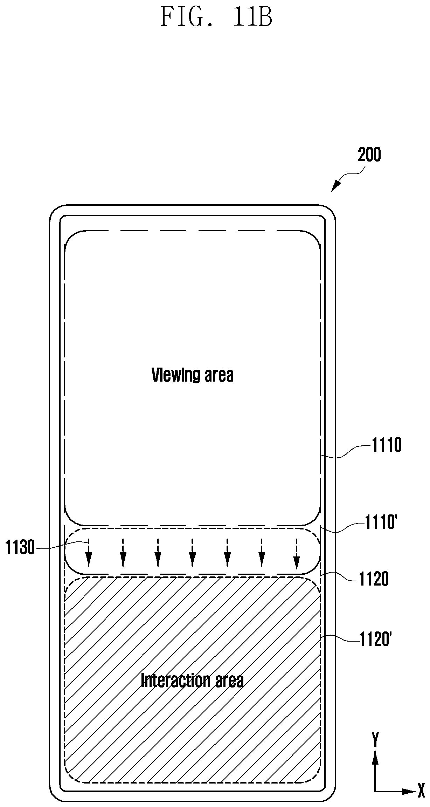

FIG. 11A is a diagram illustrating a user interface divided into a plurality of regions according to various embodiments of the disclosure. FIG. 11B is a diagram illustrating a method of adjusting a user interface so that a user can conveniently use the user interface with one hand according to various embodiments of the disclosure.

According to an embodiment, an electronic device 200 (e.g., the electronic device 101 of FIG. 1) may configure a user interface to be divided into a first area 1110 (e.g., a viewing area) and a second area 1120 (e.g., an interaction area). For example, the first area 1110 may include a display area in which an execution screen of an application is at least partially displayed when the application is executed. The second area 1120 may include an area in which a user interaction (e.g., a touch input or a gesture input) occurs.

Referring to FIGS. 11A and 11B, the electronic device 200 may adjust the sizes and positions of the first area 1110 and the second area 1120 so that a user can easily operate the electronic device 200 with one hand. For example, the size of the first area 1110 and the size of the second area 1120 may be determined based on a usage pattern (e.g., the type of a hand the user mainly uses and a touch range according to the size of the hand) of the user. Referring to FIG. 11B, the second area 1120 may be reduced along a first direction 1130 (e.g., a -y-axis direction), and conversely, the first area 1110 may be expanded along the first direction 1130 (e.g., a -y-axis direction). The second area 1120 may be reduced to a (2-1)-th area 1120', and the first area 1110 may be expanded to a (1-1)-th area 1110'. For example, when the size of the first area 1110 is increased, the size of the second area 1120 may be relatively reduced.

According to an embodiment, the electronic device 200 may adjust the size and position of the first area 1110 and/or the size and position of the second area 1120 so that a physical distance in which the user's hand moves is minimized. According to an embodiment, the directions in which the first area 1110 and the second area 1120 are expanded or reduced are not limited to a specific direction. According to an embodiment, the user may divide the first area 1110 and the second area 1120 into a form in which the user can easily manipulate the electronic device 200 with one hand and minimize physical movement. User convenience according to one-handed operation may be improved.

A method according to various embodiments may include executing at least one application installed in a memory (e.g., the memory 130 of FIG. 1), extracting attribute information corresponding to at least one input field included in an execution screen (e.g., the execution screen 210 of FIG. 2) of the at least one application in response to the execution, configuring an input list (e.g., the input list 220 of FIG. 2) based on the at least one input field, configuring a key input interface (e.g., the key input interface 230 of FIG. 2) based on the extracted attribute information to correspond to the at least one input field, and at least partially displaying the execution scree 210 of the at least one application, the input list 220, and the key input interface 230.

The displaying according to an embodiment may include configuring a user interface (e.g., the user interface 201 of FIG. 2) based on at least one of the execution screen 210 of the at least one application, the input list 220, and the key input interface 230, and displaying the configured user interface 201.

The method according to an embodiment may further include dividing the user interface 201 into a first area that is a display area and a second area that is an interaction area, identifying a direction of a hand mainly used by the user based on a usage pattern of the user, and adjusting the size and position of the first area and the second area based on the identified direction of the hand.

The method according to an embodiment may further include identifying a frequency of use corresponding to the at least one input field and configuring the input list 220 based on the identified frequency of use.

According to an embodiment, the configuring of the key input interface 230 may identifying a type of data to be input to the at least one input field based on the extracted attribute information, and configuring the key input interface 230 based on the type of the data.

According to an embodiment, the type of the data may include text and/or a number related to a date and time, and the method may further include configuring the key input interface 230 to correspond to the date and time when the type of the data is the number related to the data and time.

The method according to an embodiment may further include operatively connecting with an external electronic device, acquiring information related to the at least one input field included in the execution screen from the external electronic device, and configuring the input list and the key input interface 230 based on the acquired information.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStoreTM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display module;
a processor configured to be operatively connected to the display module; and
a memory configured to store at least one application and instructions,
a processor configured to execute the instructions to:
execute the at least one application,
extract attribute information corresponding to at least one input field included in an execution screen of the at least one application in response to the execution of the at least one application,
configure an input list based on the at least one input field,
based on the extracted attribute information, configure a key input interface to correspond to the at least one input field, and
control the display to display at least partially display the execution screen of the at least one application, the input list, and the key input interface.

2. The electronic device of claim 1, wherein the processor is further configured to execute the instructions to:
configure a user interface based on at least one of the execution screen, the input list, and the key input interface, and
control the display to display the user interface.

3. The electronic device of claim 2, wherein the processor is further configured to execute the instructions to:
divide the user interface into a first area that is a display area and a second area that is an interaction area,
identify a direction of a hand of a user based on a usage pattern stored in the memory, and
adjust the size and the position of the first area and the second area based on the identified direction of the hand.

4. The electronic device of claim 1, wherein the processor is further configured to execute the instructions to:
identify a frequency of use corresponding to the at least one input field, and
configure the input list based on the identified frequency of use.

5. The electronic device of claim 1, wherein the input list comprises at least one object corresponding to the at least one input field, and
wherein the processor is further configured to execute the instructions to:
identify that an input field corresponding to an object has been selected in response to a selection of the at least one object.

6. The electronic device of claim 5, wherein the at least one object comprises information on data recently input into the at least one input field.

7. The electronic device of claim 1, wherein the processor is further configured to execute the instructions to:
identify a type of data to be input to the at least one input field based on the extracted attribute information, and
configure the key input interface based on the type of the data,
wherein the type of the data comprises at least one of a text or a number related to a date and time.

8. The electronic device of claim 7, wherein the processor is further configured to execute the instructions to:
configure a key input interface corresponding to the date and time based on the type of the data being a number related to the date and time.

9. The electronic device of claim 1, wherein the processor is further configured to execute the instructions to:
identify whether an electronic pen is used, and
configure a key input interface for acquiring input information by the electronic pen while the electronic pen is used.

10. The electronic device of claim 1, further comprising:
a communication interface configured to be communicatively connected with an external electronic device,
wherein the instructions, when executed, further cause the processor to:
acquire information related to the at least one input field included in the execution screen from the external electronic device through the communication interface, and
configure the input list and the key input interface based on the acquired information.

11. A method comprising:
executing at least one application stored in a memory;
extracting attribute information corresponding to at least one input field included in an execution screen of the at least one application in response to the execution of the at least one application;
configuring an input list based on the at least one input field;
configuring a key input interface based on the extracted attribute information to correspond to the at least one input field; and
at least partially displaying the execution screen of the at least one application, the input list, and the key input interface.

12. The method of claim 11, wherein the displaying comprises:
configuring a user interface based on at least one of the execution screen, the input list, and the key input interface; and
displaying the configured user interface.

13. The method of claim 12, further comprising:
dividing the user interface into a first area that is a display area and a second area that is an interaction area;
identifying a direction of a hand of a user based on a usage pattern of the user; and
adjusting a size and position of the first area and the second area based on the identified direction of the hand.

14. The method of claim 11, further comprising:
identifying a frequency of use corresponding to the at least one input field; and
configuring the input list based on the identified frequency of use.

15. The method of claim 11, wherein the configuring of the key input interface comprises:
identifying a type of data to be input to the at least one input field based on the extracted attribute information; and
configuring the key input interface to correspond to a date and time based on the type of the data being a number related to the data and time,
wherein the type of the data comprises at least one of a text or a number related to the data and time.
